# EUROPÄISCHE PATENTSCHRIFT

(11) **EP 0 883 983 B1**
(45) Veröffentlichungstag und Bekanntmachung des Hinweises auf die Patenterteilung: **12.11.2003**
(21) Anmeldenummer: 98108280.3
(22) Anmeldetag: 07.05.1998
(51) Int. Cl.: A01D 41/12

(54) **Sensor für Erntemaschinen**
Sensor for harvesting machines
Capteur pour machines de récolte

(30) Priorität: 13.06.1997 DE 19725028
(43) Veröffentlichungstag der Anmeldung: 16.12.1998
(73) Patentinhaber: CLAAS Selbstfahrende Erntemaschinen GmbH, 33428 Harsewinkel (DE)
(72) Erfinder: Hübner, Ralf, 01097 Dresen (DE); Damm, Wolfram, 01109 Dresden (DE); Müller, Harald, Dr., 01307 Dresden (DE); Bernhardt, Gerd, Dr., 01189 Dresden (DE); Behnke, Willi, 33803 Steinhagen (DE)

(56) Entgegenhaltungen:
- EP-A- 0 339 142
- EP-A- 0 452 544
- DE-A- 1 935 408
- DE-A- 2 207 563
- DE-A- 3 731 080
- FR-A- 2 126 702
- GB-A- 2 002 903
- US-A- 3 935 866

## Beschreibung

Die Erfindung betrifft einen Sensor zur Ermittlung von Körperschallschwingungen, die durch das Auftreffen von Erntegut auf einen Impulsaufnehmer erzeugt werden.

Ein derartiger Sensor ist aus der deutschen Patentschrift DE 24 48 745 bekannt. Zur Messung der Verlustkörner an den Abgabeenden von Strohschüttlern und Kornreinigungseinrichtung werden über die gesamte Förderbreite steif ausgebildete Impulsaufnehmerbleche über Dämpfungselemente angebracht Auf der Unterseite dieser Bleche ist ein elektroakustischer Wandler mittels einer Federklammer angebracht. Die im Gutstrom vorhandenen Rest- bzw. Verlustkörner fallen auf die Impulsaufnehmerbleche und erzeugen Schwingungen, welche durch das Impulsaufnehmerblech bis zu dem elektroakustischen Wandler weitergeleitet werden. Das Blech ist über das Wandlergehäuse mit dem Mikrophon verbunden und wandelt die Schwingungen in ein elektrisches Signal um. Die Schwingungen werden also über mehrere Koppelstellen übertragen. Jeder Koppelpunkt stellt aufgrund seines Aufbaus und der damit verbundenen Fertigungsschritten sowie durch Korrosions-, Schmutz- und sonstige Einflüsse eine Schwachstelle des Sensors dar. Die Signalempfindlichkeit dieses Sensors ist daher nicht konstant und unterliegt altersbedingten Schwankungen.

Ein weiterer Verlustsensor ist aus der deutschen Patentschrift DE 37 31 080 bekannt. Dieser Sensor besitzt nur eine Koppelstelle. Dies wird dadurch erreicht, daß ein Piezoquarz direkt auf die Gegenseite der Impulsaufnehmerfläche angebracht wird. Die Verbindung zwischen Piezoquarz und Aufprallfläche wird mittels einer Lötung oder Klebung hergestellt. Diese Verbindung birgt einige schwerwiegende Mängel in sich. Bei großen mechanischen oder thermischen Beanspruchungen der Impulsaufnehmerfläche, wie sie z.B. bei Reinigungs-, Einstell- oder Reparaturarbeiten an den Sieben bzw. Schüttlern vorkommt, wird die Schallkopplungseigenschaft der Klebe- bzw. Lötverbindung verändert. Desweiteren sind bei derartigen Verbindung Alterserscheinungen von Bedeutung. Diese Veränderungen lassen sich schwer nachvollziehen bzw. feststellen und bedürfen zur Überwachung den Einsatz eines Fachmanns. In besonderen Fällen kann es sogar vorkommen, daß durch Fremdkörper, welche auf die Aufprallfläche treffen, die Verbindung zerstört wird. Eine Wiederherstellung der Verbindung bedarf des kompletten Ausbaus und einer Neukalibierung des Sensors. Aus zeitlichen und fachlichen Gründen wird deshalb, in den meisten Störfällen, der komplette Sensor ausgewechselt, welches zu unnötigen Kosten führt.

Aus der europäischen Patentschrift EP 0 339 142 ist ein Sensor bekannt, der mehrere Koppelstellen aufweist. Der Wandler ist hier unter Verwendung mehrerer elastischer Bauelemente und einer Signaldämpfungsschicht zwischen zwei Platten eingelegt und mittels mehrerer Schrauben miteinander verschraubt. Diese Wandler-Packung wird dann über eine weitere Schraubverbindung mit dem eigentlichen Impulsaufnehmer in Verbindung gebracht. Die Schraubverbindungen müssen hier so angeordnet werden, daß der Wandler keinen mechanischen Spannungen ausgesetzt wird und plan an den Kontaktplatten anliegt. Die Wandler-Packung und der Wandler werden deshalb auf Abstand zueinander miteinander verschraubt. Folge davon ist, eine große Verbindungsfläche zwischen Wandler-Packung und Impulsaufnehmer. Durch Einflüsse wie Staub, Verformungen des Impulsaufnehmers und Feuchtigkeit oder einen Wandlerwechsel können sich die Verbindungsflächen verändern. Je größer nun die Verbindungsflächen sind, desto weniger kann über die tatsächliche Größe der Verbindungsflächen ausgesagt werden. Es ist daher nicht voraussagbar wie groß die momentanen Verbindungsflächen sind. Die Signalempfindlichkeit ist weder konstant noch kann sie über die volle Lebensdauer gewährt werden. Der Aufbau und die Anbringung ist sehr kompliziert und bedarf bei der Erstmontage und im Reparaturfall einer fachmännischen Anleitung.
Es sind ferner keine Verfahren oder Mittel bekannt, mit denen die Funktion des Sensors überwacht werden kann.

Der Erfindung liegt daher die Aufgabe zugrunde, einen Sensor der gattungsgemäßen Art zu schaffen, der die beschriebenen Mängel behebt, definierte Koppelstellen zwischen Impulsaufnehmer und piezoelektrischem Wandler hat und einen einfachen, robusten Aufbau besitzt.

Die Lösung der Aufgabe ist im kennzeichnenden Teil des Anspruchs 1 angegebenen. Durch diese Lösung wird erreicht, daß eine, durch ein Schraubenanzugsmoment bestimmte, Koppelstelle zwischen dem Impulsaufnehmer und einem Wandler vorhanden ist. Der eingesetzte Vibrationssensor wird mittels einer mechanischen Verbindung, die eine Schraubverbindung sein kann, mit dem Impulsaufnehmer in Verbindung gebracht. Die Koppelfläche der Verbindung ist gegenüber den bekannten Lösungen relativ gering. Durch diese geringe Verbindungsfläche und einer definierten Flächenpressung werden die bekannten Koppelstellenprobleme eliminiert. Diese Art von Verbindung ist gekennzeichnet durch das Fehlen von dämpfenden Elementen.

Die Schwingung des Impulsaufnehmer wird direkt in den Vibrationssensor eingeleitet. Eine seismische Masse übt aufgrund ihrer Trägheit Druckkräfte, abhängig von der Amplitude und Frequenz der anregenden Schwingung, auf einen ringförmig, um die Koppelverbindung liegenden Piezokeramik aus. Die auf den Piezokeramik einwirkenden Kräfte bewirken innerhalb des Piezokeramik eine Ladungsverschiebung und dadurch zwischen der Keramikober- und unterseite eine elektrische, meßbare Spannung. Diese wird über Kontaktscheiben abgegriffen und nachgeschalteten Verstärker-, Filter- und Integratorschaltungen zugeführt.
In einer besonders bevorzugten Ausführung werden die Meßsignale in einer direkt an das Vibrationssensorgehäuse angekoppelte Auswerteelektronik weiterverarbeitet. Signaldämpfungen und Signalverluste werden so weitgehendst vermieden.

In einer weiteren Ausgestaltung der Erfindung kommunizieren die einzelnen Auswerte-, Anzeigeund Diagnoseeinheiten vorteilhaft über einen Kommunikationsnetzwerk. Dieses steht, wenn auf dem Fahrzeug vorhanden, mit einem Fahrzeugbussystem in Verbindung.
Der erfindungsgemäß eingesetzte Vibrationssensor ist beständig gegen Industrieklima, Wasser und Staub. Es kann daher auf entkoppelte Gehäuse- und Kapselanordnungen verzichtet werden.

Besonders bevorzugt wirkt sich die einfache Koppelstelle aus. Mittels einer einfachen Schraubverbindung kann der Sensor direkt mit dem Impulsaufnehmer in Verbindung gebracht werden. Lediglich ein Anzugsmoment muß bei der Montage berücksichtigt werden.
Für die Anwendung des Vibrationssensors in Verbindung mit einem Prallplatten-Impulsaufnehmer, wird eine noch sicherere Verbindung bzw. gleichmäßigere Flächenpressung dadurch erreicht, daß der Schraubenkopf der Verbindungsschraube etwa den Durchmesser der Koppelfläche hat und mit der Schraubenkopfunterseite den Prallplatten-Impulsaufnehmer flächig mit dem Vibrationssensor verbindet.

In einer weiteren Ausgestaltung der Erfindung kann der Impulsaufnehmer an und um die Koppelstelle herum so verstärkt werden, daß in diese beispielsweise eine Gewindebohrung eingearbeitet ist und der Sensor mittels einer Schraube befestigt werden kann.

Vorteilhaft wirkt sich auch die geringe notwendige Koppelfläche auf den Einsatzbereich des Vibrationssensor aus. Er kann dadurch an verschiedenen Impulsaufnehmerformen eingesetzt werden. Neben dem Einsatz an einer Prallplatte, ist auch der Einsatz an einem Impulsaufnehmerrohr oder -stab mit beliebigen Querschnittsformen möglich. Hierbei gibt es verschiedene Möglichkeiten den Impulsaufnehmer mit dem Vibrationssensor zu verbinden.
Für die Anbringung des Vibrationssensor an der Stirnfläche eines Impulsaufnehmerrohrs wird der Durchmesser des Impulsaufnehmer so gewählt, daß in die Stirnflächen eine Paßstück mit einer Gewindebohrung oder einem Gewindestift eingebacht werden kann und so der Impulsaufnehmer direkt mit dem Vibrationssensor verschraubbar ist.
Wir als Impulsaufnehmer ein Stab verwendet, ist es vorteilhaft den Durchmesser des Stabes größer als den für die Verbindung vorgegebenen Schraubendurchmesser zu wählen. Das Stabende wird dann auf den notwendigen Gewindedurchmesser verjüngt und mit einem Gewinde versehen. An der Stelle der Durchmesserreduzierung entsteht eine Ringfläche, die bei der Verbindung mit dem Vibrationssensor als Koppelfläche dient.
Bei allen runden Impulsaufnehmern mit kleineren Durchmessern als den für die Verbindung vorgegebenen Schraubendurchmesser und einer Anbringung des Vibrationssensor an der Stirnfläche, ist es erfindungsgemäß so vorgesehen den Durchmesser des Impulsaufnehmers an dessen Enden soweit aufzuweiten, daß der notwendige größere Durchmesser entsteht. Diese Aufweitung befinden sich dann vorteilhaft außerhalb des Sensormeßbereichs.
In Verbindung mit einem runden Impulsaufnehmer, hat sich als besonders vorteilhafte Koppelstelle eine direkte Verbindung des Vibrationssensors mit der Mantelfäche des Impulsaufnehmers erwiesen. In der Regler werden die Impulsaufnehmer senkrecht zu der Erntegutrichung in den Erntegutstrom eingebracht. Der Impulsaufnehmer wird dann radial vom Meßgut angeregt. Diese Anregung kann über ein Formteil direkt in den Vibrationssensor eingeleitet werden. Das Formteil ist beispielsweise eine kopflosen Schraube die an dem gewindelosen Ende, senkrecht zur Längsachse, eine Bohrung mit dem Durchmesser des runden Impulsaufnehmers besitzt. Der Impulsaufnehmer wird in der Bohrung am Formteil gehalten und mittels des Gewindeteils am Formteil direkt mit dem Vibrationssensor verschraubt. Die Mantelfläche hat dann direkt Kontakt zu der Koppelfläche am Impulsaufnehmer.

Die Ausführungen der Koppelstellen läßt sich beliebig erweitern, hier sollen nur noch beispielsweise einige Vebindungsmöglichkeiten genannt werden. Der Impulsaufnehmer kann durch ein speziell geformtes Formteile, durch eine Abflachung an einem Impulsaufnehmer oder auch durch ein umgebogenes Impulsaufnehmerende, welches direkt in ein Verbindungsteil übergeht, mit dem Vibrationssensor verbunden werden.

Ein weiterer Vorteil der Erfindung ergibt sich auch durch die einfach Anbringung des Sensors an der Erntemaschine.
Es ist bekannt den Sensor über Schwingungsdämpfer mit der Erntemaschine zu verbinden. Diese Anbringung dämpft das Schwingungsverhalten des Impulsaufnehmers. Es hat sich daher als besonders vorteilhaft erwiesen, den Vibrationssensor als Verbindungselement zwischen einem Schwingungsdämpfer und dem Impulsaufnehmer zu verwenden. Der Schwingungsdämpfer wird dann über eine Halterung mit der Erntemaschine verbunden. Der Vibrationssensor selbst übernimmt dann neben der Ermittlung von Körperschallschwingungen auch Teilfunktion der Halterung des Impulsaufnehmers in der Erntemaschine.

Eine weitere erfindungsmäßigen Anbringung ermöglicht es das Verbindungselement zwischen Impulsaufnehmer und Vibrationssensor über schwindungsdämpfendes Material, wie beispielsweise über eine Gummidurchführungstülle mit der Erntemaschinen zu verbinden. Hierzu kann ein Formteil dienen, welches einen gewissen Abstand zwischen dem Impulsaufnehmer und dem Vibrationssensor ermöglicht.

Die Diagnosefähigkeit eines gattungsmäßigen Sensor ist aus dem Stand der Technik unbekannt. Es wird daher erfindungsgemäß ein Vorrichtung zur Überprüfung der Funktionsfähigkeit/ Diagnose vorgeschlagen.

Die Auswerteeinheit des Vibrationssensorsignals beinhaltet einen Paßfilter. Der Arbeitsbereich des Filters ist variabel und über eine Vorwahlschaltung für verschiedene Erntegüter vorwählbar. Vorzugsweise wird der gesamte Arbeitsbereich in Teilbereich eingeteilt. Es ist nun erfindungsgemäß so vorgesehen, daß ein Diagnose-Teilbereich vorhanden ist, in welchem die Grundvibrationen des Sensoran- und -aufbaus in einem definierten Anregungszustand ermittelt werden. Die ermittelten Schwingungen können zwischengespeichert und für weitere Funktionsprüfungen als Sollwert benutzt werden. Das Abspeichern der Grundschwingungen geschieht nicht automatisch und wird nur nach der Erstmontage oder nach einer evtl. notwendigen Reparatur des Sensors durchgeführt.

Verändert sich das Schwingungsverhalten der Koppelstelle oder des Impulsaufnehmer, wird eine veränderte Grundvibration ermittelt. Bei der Über- oder Unterschreitung von vorgebbaren Grenzwerten, dem Sollschwingungsbereich wird eine Fehlermeldung generiert. Diese kann optisch, akustisch oder in jeder anderen bekannten Form sein.

Eine weitere Funktionsprüfung/ Diagnose kann erfindungsgemäß so erreicht werden, indem der Sensor in eine definierte Vibration versetzt wird. Diese kann mittels eines fest oder nur zu Prüfzwecken am Impulsaufnehmer oder am Vibrationssensor angebauten Impulsgebers erfolgen. Über die vorhandene Auswertung- und Anzeigevorrichtung wird die definierte Vibration gemessen und ausgewertet. Hierzu kann wieder ein bestimmter Diagnose- Teilbereich auswählbar vorhanden sein.
Die Funktionsprüfung des Sensors kann im Rahmen eines Maschinenchecks oder von Hand oder zyklisch oder beim Vorhandensein von bestimmten Parametern, wie z.B.: "Dreschwerk Stillstand", "Schneidwerk ausgehoben" und "kein Durchsatz" u.a., durchgeführt und bei der Anbringung von mehreren Sensoren an einer Maschine gleichzeitig oder in einer vorgegebenen Reihenfolge vorgenommen werden.
Wird der Diagnosemodus angewählt so wird erfindungsgemäß der erforderliche Diagnose- Teilbereich der Auswerteeinrichtung automatisch angewählt. Das Diagnoseergebnis wird über die übliche Anzeigeeinheit oder über eine separate Diagnoseanzeige angezeigt. Beim Vorhandensein von mehreren Sensoren in einer Maschine können die Prüfungsergebnisse über eine gemeinsame Anzeige mit entsprechender Sensorkennzeichnung oder parallel über mehrere Anzeigeelemente angezeigt werden.

Desweiteren wird ein Verfahren zur Auswertung der Sensorsignale derart vorgeschlagen, daß die Sensorsignale durch eine erntegutspezifische Größe korrigiert werden. Es ist bekannt die Sensorsignale in Abhängigkeit der Erntegutkorngröße, Erntegutart sowie Fahrgeschwindigkeit der Erntemaschine zu korrigieren. Die Ausage der Korngröße, Kornart oder Fahrgeschwindigkeit stellen nur indirekte die Größen dar, die einen Einfluß auf das Sensorsignal haben. Die Erntegutgröße oder -art sagt nur indirekt etwas über die Masse, die einen Einfluß auf die Anregung des Impulsaufnehmer hat, der einzelnen Erntegutkörner aus, es wird daher erfindungsgemäß vorgeschlagen, eine erntegutspezifische Größe wie das Tausendkorngewicht und/oder das Hektolitergewicht mit in die Auswertung der Sensorsignale einzubeziehen.
Desweiteren hat die Erntegutfeuchte einen Einfluß auf die von den Erntegutkörner erzeugten Sensorsignale. Erntegüter mit höherer Feuchte erzeugen ein geringeres Sensorsignal als Erntegut mit niedrigerer Feuchte. Es wird daher vorgeschlagen auch die Erntegutfeuchte bei der Auswertung der Sensorsignale mit einzubeziehen.
Um eine Aussage über die Höhe der Ernteverluste zu bekommen muß der Erntegutdurchsatz durch die Erntemaschine mit in der Auswertung berücksichtig werden. Die Einbeziehung der Fahrgeschwindigkeit in die Korrekturrechnung ermöglicht dies nur in den Ausnahmefällen, bei denen die Höhe des Ernteertrags konstant ist. Es wird daher erfindungsgemäß vorgeschlagen den Erntegutdurchsatz mit in die Auswertung der Sensorsignale einzubeziehen und somit eine Information über den relativen Ernteverlust zu erhalten.

Die Erfindung wird nun anhand von Ausführungsbeispielen näher erläutert.
Es zeigen:
- Figur 1: den schematischen Aufbau eines Vibrationssensors,
- Figur 2: den Sensor mit plattenförmigen Impulsaufnehmer und direkt angebauter Auswerteelektronik,
- Figur 3: den Vibrationssensor an einen rohrförmigen Impulsaufnehmer,
- Figur 4: den Sensor an einem plattenförmigen Impulsaufnehmer mit zusätzlich, für Diagnosezwecke, am Impulsaufnehmer angebrachten Impulsgeber,
- Figur 5: den Sensor mit rundem Impulsaufnehmer und einem Formteil, welches direkt mit dem Vibrationssensor und einem Schwingungsdäpfer verschraubt ist,
- Figur 6: die Draufsicht auf den in Figur 5 dargestellten Sensor,
- Figur 7: den Sensor mit an den Erntegutstrom angepaßten Impulsaufnehmer und einem Verbindungselement, welches mit einer schwingungsdämpfenden Halterung verbunden ist.

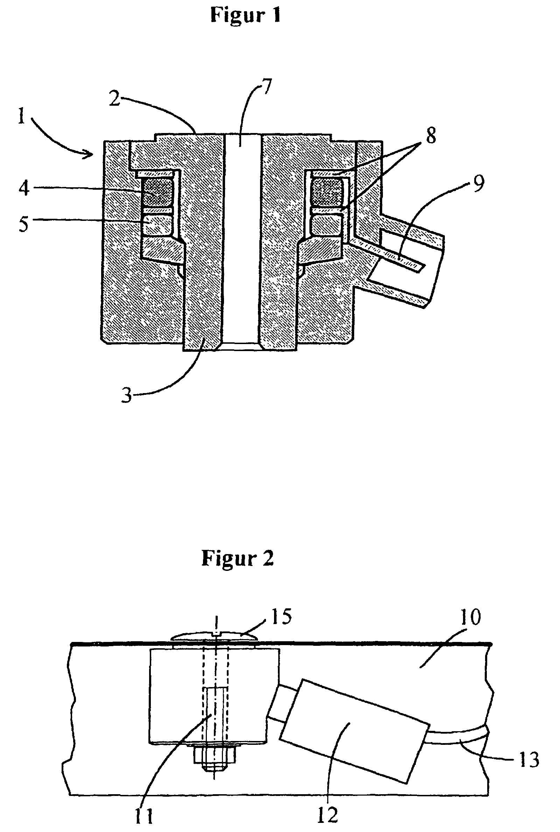

In Figur 1 wird der schematische Aufbau eines erfindungsgemäß eingesetzten Vibrationssensors 1 dargestellt. Der Vibrationssensor 1 kann über die Bohrung 7 direkt mit einem Impulsaufnehmer 10 verbunden werden. Durch auf den Impulsaufnehmer 10 fallenden Erntegutbestandteile werden Schwingungen erzeugt, die über die Koppelfläche 2 direkt in den Vibrationssensor 1 übertragen werden. Eine Metallhülse 3 überträgt die Schwingung auf einen beidseitig mit Kontaktringen 8 versehenen Piezokeramikring 4. Durch die Trägheit der über dem Keramikring 4 angeordneten Masse 5 werden im Rhythmus der Schwingungen, Kräfte auf die Piezokeramik 4 ausgeübt. Diese Kräfte erzeugen eine Ladungsverschiebung in der Piezokeramik 4. Diese wird als elektrische Spannung über die Kontaktierung 8 abgegriffen und steht an den Steckkontakten 9 als Meßsignal zur Verfügung.

In Figur 2 ist der Vibrationssensor 1 direkt mit einem plattenförmigen Impulsaufnehmer 10 verschraubt. Der Impulsaufnehmer 10 wird durch ein Blech gebildet, welches sich über Teile oder über die gesamte Abscheide- oder Dreschorganbreite erstreckt und vorzugsweise senkrecht zum Erntegutstrom angeordnet ist. Der Vibrationssensor 1 ist mit einer Flachkopfschraube 11 durch die Bohrung 7 mit dem Impulsaufnehmer 10 verschraubt. Der Schaubenkopf 15 hat einen Durchmesser der annähernd dem des Koppelflächendurchmessers entspricht. Hierdurch wird eine gleichmäßige Flächenpressung erreicht. An dem Vibrationssensor 1 ist direkt eine Auswerteelektronik 12 angekoppelt. Dadurch werden die zum Teil schwachen Meßsignale ohne größere Verluste direkt zur Auswerteelektronik 12 übertragen. Die Meßsignale werden dann über die Signalleitung 13 an eine nachgeschaltete Auswerte-, Funktionstest- und/ oder Anzeigeeinheit übertragen.

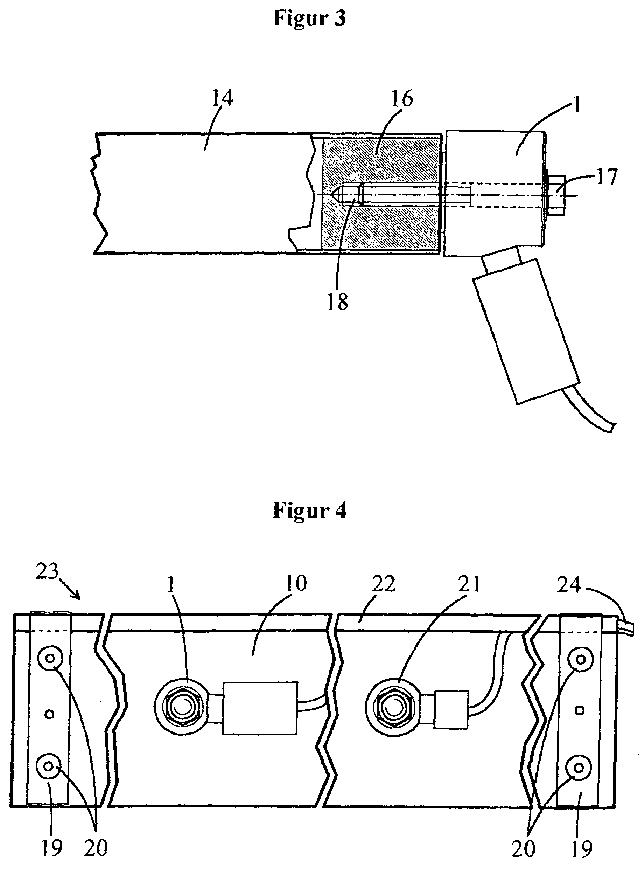

In einer weiteren Figur 3 wird der Vibrationssensor 1 in Verbindung mit einem rohrförmigen Impulsaufnehmer 14 gezeigt. Der Impulsaufnehmer 14 erstreckt sich über Teile oder über die gesamte Abscheide- oder Dreschorganbreite. Damit der Vibrationssensor 1 nicht direkt dem Gutstrom ausgesetzt wird, kann sich der Impulsaufnehmer 14 auch über die Abscheide- oder Dreschorganbreite hinaus erstrecken. An einem Rohrende wird ein Paßstück 16 eingepreßt, das eine zentral angeordnete Bohrung 18 enthält. In diese Bohrung 18 wird mit Hilfe einer Schraube 17 der Vibrationssensor 1 befestigt.

In Figur 4 ist die Unterseite eines plattenförmigen Impulsaufnehmers 10 mit angebautem Vibrationssensor 1 und einem zusätzlich angebauten Impulsgeber 21 dargestellt. Die Anordnung ist so gewählt, daß die Koppelstelle zwischen Vibrationssensor 10 und Impulsaufnehmer 1 überprüft werden kann. Mit dem Impulsgeber 21 wird der Impulsaufnehmer 10 mit einer definierten Schwingung beaufschlagt. Die Auswerte-, Funktionstest- und Anzeigeeinheiten werden auf die definitionsgemäß bekannten Anregung eingestellt. Liegt der gemessene Werte nicht in dem vorgegebenen beziehungsweise programmierten Sollschwingungsbereich, so liegt ein Fehler im Sensorsystem vor.

An den Enden des Impulsaufnehmers sind Halteelemente 19 angebracht. Über diese wird der Sensor 23 mittels Schwingungsdämpfer 20 mit der Erntemaschine verbunden. Im oberen Bereich der Figur 4 ist eine Mehrfachabkantung 22 zu sehen. Sie dient zur Stabilisierung des Impulsaufnehmers 10 und übernimmt auch teilweise die Führung der Leitungen 24.

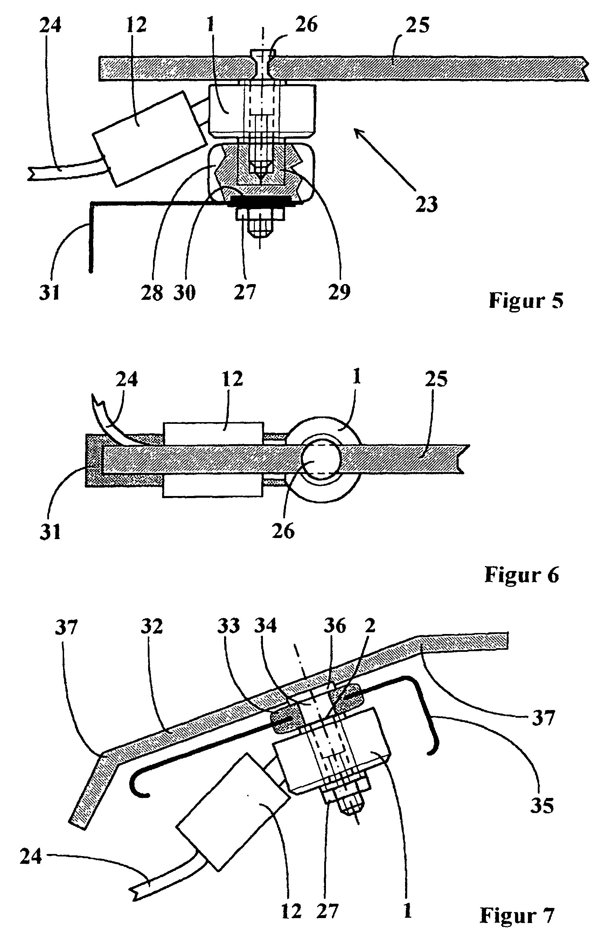

In der Figur 5 wird ein runder Impulsaufnehmer 25 mit Hilfe einer kopflosen Schraube 26 direkt mit dem Vibrationssensor 1 verbunden. Die kopflose Schraube 26 besitzt an dem gewindelosen Ende eine senkrecht zur Längsachse verlaufende Bohrung, durch welche der Impulsaufnehmer 25 gehalten wird. Die kopflose Schraube 26 mit Impulsaufnehmer 25 wird durch den Vibrationssensor 1 gestreckt und mit einem, in einem Schwingungsdämpfer 28 eingegossenen Formteil 29, mit einem Innengewinde, verschraubt. Über das Anzugsmoment diese Schraubverbindung wird die Mantelfläche des Impulsaufnehmers 25 mit einer definierten Flächenpressung mit dem Vibrationssensor 1 verbunden. In dem Schwingungsdämpfer 28 ist eine weiteres Formteil 30, mit einem Gewindestift, eingegossen. Über diesen Gewindestift kann der Sensor 23 über einen Haltewinkel 31 direkt mit der Erntemaschine verbunden werden.

In Figur 6 wird eine nicht maßstabgeteuen Draufsicht auf den Sensor 23 mit einem runden Impulsaufnehmer 25 entsprechend einer Seitenansicht von Figur 5 gezeigt. Es ist ersichtlich, daß durch die einfache schlanke Bauform der Sensors 23 direkt in den Erntegutstrom eingebracht werden kann.

Figur 7 zeigt eine weitere Möglichkeit, wie man den Sensors 23 in einer Erntemaschine anbringen kann. Der Impulsaufnehmer 32 ist ein an den Enden abgewinkeltes Profil mit beliebiger Querschnittsform, welches hier in der Erntegutstromrichtung angeordnet ist. Die Abkantungen 37 der Enden verhindern, daß sich im Erntegutstrom befindliches Stroh oder Unkraut am Impulsaufnehmer 32 verhackt und ablagert. Das Blech 35 ist ein in Windrichtung ausgerichtetes Leit- und Stabilisierungsblech in einer Reinigungseinrichtung eines Mähdreschers. Es erstreckt sich über die gesamte Reinigungseinrichtungsbreite und kann als Halterung für ein oder mehrere erfindungsmäßige Sensoren 23 dienen. Der Sensor 23 wird in einem Loch im Blech 35 durch eine schwingungsdämpfende Durchführungstülle 33 mit einem Innendurchmesser, der größer als den für die Verbindung vorgegebenen Schraubendurchmesser ist, gehalten. Das Formteil 34 ist direkt mit dem Impulsaufnehmer 32 verschweißt oder verlötet. Der Durchmesser des Formteilkopfes 36 ist größer als der Innendurchmesser der Durchführungstülle 33. Daran anschließend besitzt das Formteil 34, auf eine kleineren Länge als die Dicke der Durchführungstülle 33, einen Durchmesser der etwa dem Innnendurchmesser der Durchführungstülle 33 entspricht. Das Formteil verjüngt sich dann auf den, für die Verbindung vorgegebenen Schraubendurchmesser und endet mit einem Gewinde. Über dieses Gewinde und einer Mutter 27 wird der Impulsaufnehmer 32 mit dem Vibrationssensor 1 verschraubt. Durch die besondere Ausgestaltung des Formteils 34 wird die Durchführungstülle 33, bei dem Verschrauben mit dem Vibrationssensor 1, zusammengedrückt. Der Sensor 23 wird dadurch verdrehsicher am Blech 35 gehalten.
Desweiteren steht der Impulsaufnehmer 32 über das Formteil 34 direkt mit der Koppelfläche 2 des Vibrationssensor 1 in Verbindung. Diese Anbringungsart beinhaltet den weiteren Vorteil, daß der Sensor 23 den Erntegutstroms nur gering behindert und somit der Vibrationssensor 1 sowie die angebaute Auswerteelektronik 12 vor Verschmutzungen geschützt sind.

### Bezugszeichenliste:

- 1: Vibrationssensor
- 2: Koppelfläche
- 3: Metallhülse
- 4: Piezokeramik
- 5: Masse
- 6: Gehäuse
- 7: Bohrung
- 8: Kontaktierung
- 9: Steckkontakt
- 10: plattenförmiger Impulsaufnehmer
- 11: Flachkopfschraube
- 12: Auswerteelektronik
- 13: Signalleitung
- 14: rohrförmiger Impulsaufnehmer
- 15: Schraubenkopf
- 16: Paßstück
- 17: Schraube
- 18: Bohrung
- 19: Halteelemente
- 20: Schwingungsdämpfer
- 21: Impulsgeber
- 22: Mehrfachabkantung
- 23: Sensor
- 24: Leitungen
- 25: runder Impulsaufnehmer
- 26: kopflose Schraube
- 27: Mutter
- 28: Schwingungsdämpfer
- 29: Formteil mit Innengewinde
- 30: Formteil mit Gewindestift
- 31: Haltewinkel
- 32: Impulsaufnehmer
- 33: Durchführungstülle
- 34: Formteil
- 35: Blech
- 36: Formteilkopf
- 37: Abkantung

## Patentansprüche

1. Sensor (23) für eine Erntemaschine, der zur Überwachung der Dresch- und/oder Abscheideleistung und/ oder Kornverluste an Erntemaschinen eingesetzt wird und aus einem Impulsaufnehmer (10,14,25,32) und einem daran befestigten Schwingungsaufnehmer, der ein piezoelektrischer Vibrationssensor (1) zur Messung von Körperschallschwingungen ist, besteht,
**dadurch gekennzeichnet,**
**daß** der Schwingungsaufnehmer mittels einer lösbaren Verbindung mit dem Impulsaufnehmer (10,14,25,32) in Verbindung steht.

2. Sensor nach Anspruch 1,
**dadurch gekennzeichnet,**
**daß** der Impulsaufnehmer eine plattenförmiger Impulsaufnehmer (10) ist.

3. Sensor nach Anspruch 2,
**dadurch gekennzeichnet,**
**daß** der Vibrationssensor (1) mittels einer Schraube (15) mit dem Impulsaufnehmer (10) verbunden ist.

4. Sensor nach Anspruch 2 oder 3,
**dadurch gekennzeichnet,**
**daß** der plattenförmige Impulsaufnehmer (10) an oder im Bereich der Koppelstelle eine Materialverstärkung zur Befestigung des Vibrationssensors (1) aufweist.

5. Sensor nach Anspruch 1,
**dadurch gekennzeichnet,**
**daß** der Impulsaufnehmer ein runder Impulsaufnehmer (25) ist, der eine Koppelstelle besitzt, über welche der Impulsaufnehmer mit dem Vibrationssensors (1) verbunden werden kann.

6. Sensor nach Anspruch 5,
**dadurch gekennzeichnet,**
**daß** der Vibrationssensor (1) mittels einer Schraubverbindung (17,18) an einem runden Impulsaufnehmer (14, 25) befestigt ist.

7. Sensor nach einem oder mehreren der Ansprüche 1 bis 6,
**dadurch gekennzeichnet,**
**daß** der Impulsaufnehmer (10,14,25,32) mittels eines Formteils (26,34) mit dem Vibrationssensor (1) verbunden ist.

8. Sensor nach Anspruch 7,
**dadurch gekennzeichnet,**
**daß** das Formteil (26) eine kopflose Schraube ist, die an dem gewindelosen Schraubenende eine Bohrung senkrecht zur Längsachse besitz, die als Aufnahme für einen runden Impulsaufnehmer (25) dient.

9. Sensor nach einem oder mehreren der vorherigen Ansprüche,
**dadurch gekennzeichnet,**
**daß** der Vibrationssensor (1) Bestandteil der Halterung für den Impulsaufnehmer in einer Erntemaschine ist.

10. Sensor nach einem oder mehreren der vorherigen Ansprüche,
**dadurch gekennzeichnet,**
**daß** das Formteil (34) Bestandteil der Halterung für den Impulsaufnehmer in einer Erntemaschine ist.

11. Sensor nach einem oder mehreren der vorherigen Ansprüche,
**dadurch gekennzeichnet,**
**daß** die Meßsignale des Vibrationssensors (1) in einer Auswerteelektronik (12), die unmittelbar mit dem Vibrationssensor (1) in Verbindung steht, weiterverarbeitet werden.

12. Sensor nach einem oder mehreren der vorherigen Ansprüche,
**dadurch gekennzeichnet,**
**daß** die Auswerteelektronik (12) über Signalleitungen (13,24) mit Auswerte-, Funktionstest- und/oder Anzeigeeinheiten in Verbindung steht.

13. Sensor nach einem oder mehreren der vorherigen Ansprüche 1 bis 12,
**dadurch gekennzeichnet,**
**daß** in der Funktionstesteinheit ein Diagnose- Teilbereich vorgesehen ist, in welchem die Schwingungen des Impulsaufnehmers (10,14,25,32), bei einer definierten Anregung des Impulsaufnehmers (10,14,25,32), gemessen wird.

14. Sensor nach Anspruch 13,
**dadurch gekennzeichnet,**
**daß** durch einen fest am Impulsaufnehmer (10,14,25,32) oder nur zu Prüfzwecken am Impulsaufnehmer (10,14,25,32) oder am Vibrationssensor (1) angebrachten Impulsgeber (21), die definierte Anregung des Impulsaufnehmers (10,14,25,32) erzeugt wird.

15. Sensor nach einem oder mehreren der vorherigen Ansprüche 13 oder 14,
**dadurch gekennzeichnet,**
**daß** die Funktionstesteinheit, den Funktionstest bei einem bestimmten Erntemaschinenzustand durchführt.

16. Sensor nach einem oder mehreren der vorherigen Ansprüche 13 bis 15,
**dadurch gekennzeichnet,**
**daß** die Funktionstesteinheit, die bei einer Funktionsprüfung ermittelten Schwingungen als Sollschwingungen speichert und/oder mit einem Sollschwingungsbereich vergleicht.

17. Sensor nach Anspruch 16,
**dadurch gekennzeichnet,**
**daß** die Funktionstesteinheit eine Fehlermeldung bei einer Über- oder Unterschreitung des Sollschwingungsbereichs generiert.

18. Sensor nach einem oder mehreren der vorherigen Ansprüche 13 bis 17,
**dadurch gekennzeichnet,**
**daß** die Funktionstesteinheit, eine Funktionsprüfung im Rahmen eines Maschinenchecks oder von Hand oder zyklisch oder beim Vorhandensein von bestimmten Betriebsparametern auslöst.

19. Sensor nach einem oder mehreren der vorherigen Ansprüche 13 bis 18,
**dadurch gekennzeichnet,**
**daß** die Funktionstesteinheit beim Vorhandensein von mehreren Sensoren (23) an einer Erntemaschine die Funktionsprüfung gleichzeitig oder nach einer vorgegeben Reihenfolge durchführt.

## Claims

1. A sensor (23) for a harvester, which sensor is used for monitoring threshing and/or separating performance and/or grain losses on harvesters and comprises an impulse pickup (10, 14, 25, 32) and a vibration pickup which is fixed thereto and which is a piezoelectric vibration sensor (1) for the measurement of vibrations involving sound conducted through solids, **characterised in that** the vibration pickup is connected to the impulse pickup (10, 14, 25, 32) by means of a releasable connection.

2. A sensor according to claim 1 **characterised in that** the impulse pickup is a plate-shaped impulse pickup (10).

3. A sensor according to claim 2 **characterised in that** the vibration sensor (1) is connected to the impulse pickup (10) by means of a screw (15).

4. A sensor according to claim 2 or claim 3 **characterised in that** the plate-shaped impulse pickup (10) at or in the region of the coupling location has a material reinforcement for fixing the vibration sensor (1).

5. A sensor according to claim 1 **characterised in that** the impulse pickup is a round impulse pickup (25) having a coupling location by way of which the impulse pickup can be connected to the vibration sensor (1).

6. A sensor according to claim 5 **characterised in that** the vibration sensor (1) is fixed by means of a screw connection (17, 18) to a round impulse pickup (14, 25).

7. A sensor according to one or more of claims 1 to 6 **characterised in that** the impulse pickup (10, 14, 25, 32) is connected to the vibration sensor (1) by means of a shaped portion (26, 34).

8. A sensor according to claim 7 **characterised in that** the shaped portion (26) is a headless screw which on the threadless screw end has a bore perpendicularly to the longitudinal axis, which serves as a receiving means for a round impulse pickup (25).

9. A sensor according to one or more of the preceding claims **characterised in that** the vibration sensor (1) is a component part of the holding means for the impulse pickup in a harvester.

10. A sensor according to one or more of the preceding claims **characterised in that** the shaped portion (34) is a component part of the holding means for the impulse pickup in a harvester.

11. A sensor according to one or more of the preceding claims **characterised in that** the measurement signals of the vibration sensor (1) are subjected to further processing in an electronic evaluation means (12) which is connected directly to the vibration sensor (1).

12. A sensor according to one or more of the preceding claims **characterised in that** the electronic evaluation means (12) is connected by way of signal lines (13, 24) to evaluation, functional testing and/or display units.

13. A sensor according to one or more of preceding claims 1 to 12 **characterised in that** provided in the functional testing unit is a diagnosis sub-region in which the vibrations of the impulse pickup (10, 14, 25, 32) are measured at a defined excitation of the impulse pickup (10, 14, 25, 32).

14. A sensor according to claim 13 **characterised in that** the defined excitation of the impulse pickup (10, 14, 25, 32) is produced by an impulse generator (21) which is mounted fixedly to the impulse pickup (10, 14, 25, 32) or only for test purposes to the impulse pickup (10, 14, 25, 32) or the vibration sensor (1).

15. A sensor according to one or more of preceding claims 13 and 14 **characterised in that** the functional testing unit carries out the functional test in a given condition of the harvester.

16. A sensor according to one or more of preceding claims 13 to 15 **characterised in that** the functional testing unit stores the vibrations ascertained in a functional checking procedure as reference vibrations and/or compares same to a reference vibration range.

17. A sensor according to claim 16 **characterised in that** the functional testing unit generates an error message when the value exceeds or falls below the reference vibration range.

18. A sensor according to one or more of preceding claims 13 to 17 **characterised in that** the functional testing unit triggers a functional checking procedure in the context of a machine check or by hand or cyclically or when given operating parameters prevail.

19. A sensor according to one or more of preceding claims 13 to 18 **characterised in that** when there are a plurality of sensors (23) on a harvester the functional testing unit carries out the functional checking procedure simultaneously or in accordance with a predetermined sequence.

## Revendications

1. Capteur (23) pour une machine de récolte, utilisé pour surveiller le débit de battage et/ou le débit de séparation et/ou les pertes de grains dans des machines de récolte et formé d'un capteur d'impulsions (10, 14, 25, 32) et d'un capteur de vibrations fixé à ce dernier, le capteur de vibrations étant un capteur de vibrations (1) piézoélectrique pour la mesure des vibrations sonores de structure, **caractérisé en ce que** le capteur de vibrations est lié au capteur d'impulsions (10, 14, 25, 32) par une liaison séparable.

2. Capteur selon la revendication 1, **caractérisé en ce que** le capteur d'impulsions est un capteur d'impulsions (10) en forme de plaque.

3. Capteur selon la revendication 2, **caractérisé en ce que** le capteur de vibrations (1) est fixé au capteur d'impulsions (10) au moyen d'une vis (15).

4. Capteur selon la revendication 2 ou 3, **caractérisé en ce que** le capteur d'impulsions (10) en forme de plaque, au niveau du point de couplage ou dans la région de celui-ci, présente un renfort de matière pour la fixation du capteur de vibrations (1).

5. Capteur selon la revendication 1, **caractérisé en ce que** le capteur d'impulsions est un capteur d'impulsions (25) rond, avec un point de couplage, par l'intermédiaire duquel ledit capteur d'impulsions peut être lié au capteur de vibrations (1).

6. Capteur selon la revendication 5, **caractérisé en ce que** le capteur de vibrations (1) est fixé à un capteur d'impulsions (25) rond par une liaison vissée (17, 18).

7. Capteur selon une ou plusieurs des revendications 1 à 6, **caractérisé en ce que** le capteur d'impulsions (10, 14, 25, 32) est fixé au capteur de vibrations (1) par l'intermédiaire d'une pièce façonnée (26, 34).

8. Capteur selon la revendication 7, **caractérisé en ce que** la pièce façonnée (26) est une vis sans tête, qui est pourvue, à son extrémité non filetée, d'un trou perpendiculaire à l'axe longitudinal servant de logement pour un capteur d'impulsions (25) rond.

9. Capteur selon une ou plusieurs des revendications précédentes, **caractérisé en ce que** le capteur de vibrations (1) fait partie du support pour le capteur d'impulsions dans une machine de récolte.

10. Capteur selon une ou plusieurs des revendications précédentes, **caractérisé en ce que** la pièce façonnée (34) fait partie du support pour le capteur d'impulsions dans une machine de récolte.

11. Capteur selon une ou plusieurs des revendications précédentes, **caractérisé en ce que** les signaux de mesure du capteur de vibrations (1) sont traités dans une électronique de traitement (12), qui est directement connectée au capteur de vibrations (1).

12. Capteur selon une ou plusieurs des revendications précédentes, **caractérisé en ce que** l'électronique de traitement (12) est reliée par des lignes de signaux (13, 24) à des unités de traitement, de test de fonctionnement et/ou d'affichage.

13. Capteur selon une ou plusieurs des revendications 1 à 12 précédentes, **caractérisé en ce qu'**il est prévu dans l'unité de test de fonctionnement une partie diagnostic, dans laquelle les vibrations du capteur d'impulsions (10, 14, 25, 32) pour une excitation définie du capteur d'impulsions (10, 14, 25, 32) sont mesurées.

14. Capteur selon la revendication 13, **caractérisé en ce que** l'excitation définie du capteur d'impulsions (10, 14, 25, 32) est produite par un générateur d'impulsions (21) qui est monté fixe sur le capteur d'impulsions (10, 14, 25, 32) ou est placé seulement à des fins de test sur le capteur d'impulsions (10, 14, 25, 32) ou le capteur de vibrations (1).

15. Capteur selon la revendication 13 ou 14, **caractérisé en ce que** l'unité de test de fonctionnement réalise le test de fonctionnement dans un état déterminé de la machine de récolte.

16. Capteur selon une ou plusieurs des revendications 13 à 15 précédentes, **caractérisé en ce que** l'unité de test de fonctionnement mémorise comme vibrations de consigne les vibrations déterminées lors d'un test de fonctionnement et/ou les compare à une plage de vibrations de consigne.

17. Capteur selon la revendication 16, **caractérisé en ce que** l'unité de test de fonctionnement génère un message d'erreur en présence d'un dépassement vers le haut ou vers le bas de la plage de vibrations de consigne.

18. Capteur selon une ou plusieurs des revendications 13 à 17 précédentes, **caractérisé en ce que** l'unité de test de fonctionnement déclenche un contrôle de fonctionnement dans le cadre d'un checking de la machine ou manuellement ou de manière cyclique ou en présence de paramètres de fonctionnement déterminés.

19. Capteur selon une ou plusieurs des revendications 13 à 18 précédentes, **caractérisé en ce que** l'unité de test de fonctionnement dans le cas de plusieurs capteurs (23) sur une machine de récolte réalise un test de fonctionnement simultanément ou selon une séquence prédéfinie.
